# EUROPEAN PATENT APPLICATION

(11) **EP 2 182 119 A1**
(43) Date of publication of application: **05.05.2010**
(21) Application number: 08761503.5
(22) Date of filing: 16.04.2008
(51) Int. Cl.: E01H 1/12

(54) **ELECTRICALLY-OPERATED ANIMAL EXCREMENT COLLECTOR**

(30) Priority: 30.08.2007 ES 200701810 U
(71) Applicant: Merino García, Jesús, 46910 Sedavi (ES)
(72) Inventor: Merino García, Jesús, 46910 Sedavi (ES)
(74) Representative: Naranjo Marcos, Maria Antonia
(86) International application number: PCT/ES2008/000256
(87) International publication number: WO 2009/027545

(57) **Abstract**

The invention relates to an ellectrically-operated animal excrement collector comprising two units. The first unit includes a handle, switches and internally-wound leash and a external leash, a LED, a battery and a motor which drives a shaft or endless screw and internal wiring. The second unit includes claws formed by bars which terminate in an angle and which are secured to a supporting element and joined to a cylinder and the endless screw. The claws serve as a bag-securing mechanism. The assembly can be provided with an LED , a leash and a compartment for storing bags.

## Description

This invention basically relates to a device which is used to collect animal excrement, mainly on public thoroughfares, pavements, parks and gardens in towns and cities.

This invention is innovative, practical, straightforward and light, which means that while you are out walking your pet (using the lead which can be included as an option), the animal is able to deposit its excrement at any time and in any place on the public thoroughfare, pavement, park, etc. When the pet has finished, the owner can collect it in a civic-minded and convenient manner, placing the lower end of the collector over the excrement and activating the device. "Claws" or metal rods will emerge which collect the excrement and deposit it in a disposable plastic bag which will have been previously placed inside the claws, thus removing the excrement from the public thoroughfare and keeping it out of everyone's reach.

Following this quick and straightforward operation, the bag is sealed with elastic or string which it has around the edge and is disposed of in the nearest container or bin, saving us the bother of picking it up with our hands in a plastic or paper bag or the unpleasant task of having to bend down to pick up the excrement and carry it until a container or bin can be found.

All this without your hands ever going near the excrement.

The device also offers the innovative feature of having a small optional torch fitted, for use on night-time walks and in badly-lit areas.

### BACKGROUND TO THE INVENTION

The invention is fundamentally designed to be used with pets. Its most common use will therefore be the collection of dog excrement. However, anyone who has a pet and needs to collect its excrement, both inside and outside of the house, will be able to do so without this being an unpleasant or antisocial task.

You are sure to have thought more than once about how irritating it is to walk along the pavements of towns and cities, having to avoid dog excrement so as not to step in it.

The lack of convenient and practical resources means that both the authorities and pet owners, while acknowledging how dirty and unhygienic it is, allow pets to do their business on the pavements, parks and gardens in many cities.

The local authorities of almost all the towns and cities in the world spend millions of Euros a year exclusively on cleaning up dog excrement. They have attempted to impose penalties on owners for their antisocial behaviour, but this measure is not the solution.

Some people remove their pets' excrement as best they can, but others, the vast majority, simply look the other way and carry on walking their pet.

This device significantly improves and surpasses the advantages offered by other existing resources for similar purposes, such as the "bag", "tongs" or "manual collector", as by using it there is no need to bend over and take the excrement to the nearest bin (which in many places is not as close as one would like), thus avoiding the inconvenience of trying to walk the animal at the same time; nor do you have to pick it up with your "hands", as is the case with the bags, which many people find unpleasant. There is also no need to have a lead and/or torch in the other hand.

There are industrial machines which some local authorities hire for this purpose. However, animals do their business at least three times a day and these machines only pass by every now and then, so the dog excretion is often left on public thoroughfares for several days. Another disadvantage of these machines is that they don't go along every street, making some pavements impassable.

The results are clear to see, and it would seem that these machines have not been very effective. We therefore believe there is a need to create an innovative, practical, light, straightforward, fast and economical system such as the one we offer, as local authorities in towns and cities throughout most of the world are spending millions of Euros a year on cleaning the streets and pavements as a result of this problem.

The aim of the collector is to create a device for "domestic" use so that people who have pets, and particularly those who walk their dogs around the streets so that the pets can do their business, will finally have an effective resource which offers them a system for the immediate collection of excrement in a personal and individual manner, raising awareness of the need to keep their environment clean.

The responsibility for removing excrement does not lie with the animal, but the owner.

### DESCRIPTION OF THE INVENTION

This invention is an easy-to-use, fast and very useful device for users, and may be used to collect animal excrement anywhere, but mainly when walking pets in the street. As an option, it can include an extendable and retractable lead for walking the animal without needing to have both hands occupied, and may also contain a torch to provide light in places with poor visibility.

Its mechanism can be simple, as will be explained in the section describing the preferred embodiment and the attached drawings.

The device may be manufactured in one or more parts. However, we prefer it to have two main parts which can be attached to each other, dividing it into two halves, transversally and vertically, thus making it easier for the components to be fitted in its interior and their subsequent cleaning, maintenance and possible repair.

The advantages of this invention can be inferred from the device specifications, although some of the most important ones include but are not limited to those mentioned below. In addition to the advantages resulting from its use as explained above, the following should also be taken into account:
- Lightweight and therefore easy to transport.
- Easy to clean
- Immediacy and speed of collection
- Personal and individual use
- The collector can include an optional extendable and retractable lead and an LED light as a torch.
- It provides autonomous use due to being battery-operated.
- Easy to use and handle. Suitable for all ages
- Device designed to pick up animal excretion inside and outside of the house. Light, fast, clean, practical, useful and economical. Designed for daily personal and autonomous use thanks to its rechargeable battery, which offers both the user and the pet complete freedom of movement.
- It will enable the civic-minded behaviour of a large majority of people with regard to the removal of excretion from public thoroughfares, particularly that of dogs.

### BRIEF DESCRIPTION OF THE DRAWINGS

In order to make the text easier to follow, attached below are drawings of the prototype showing an example of what would be a general view of the device and its main components. The external shape or model or the placement of the elements in the units may undergo some logical changes in comparison with the prototype in its subsequent manufacture, without this affecting its essential function.

In accordance with the above and the attached designs, shown below are the following:
Figure 1: General view of the collector. Picture of the prototype in a vertical position.
Figure 2: View of the lower end from the front. Detail of the closed collection mechanism. Detail of the "claws" in the interior of the device.
Figure 3: General view of the two units of the collector. Picture of the prototype in a horizontal position. Imaginary line separating the part corresponding to unit 1 and the part corresponding to unit 2 of the collection mechanism.
Figure 4: External view of the device with the collection mechanism open. Detail of the bag which is inserted into the "claws" before the excrement is removed from the ground.
Figure 5: View with a cross section showing the interior of the device. Detail of the main components in the interior.

### DESCRIPTION OF PREFERRED EMBODIMENT

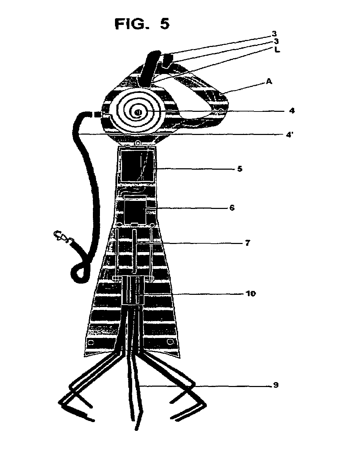

According to the designs described above, the excrement collector will preferably consist of two parts (fig. 5) which can be attached to each other, making it easier to place the components in its interior and subsequently improving the cleaning, emptying and maintenance process. It will be possible for the collector to be made of either one or two parts. Its external part will be constructed of a light but strong plastic material, preferably biocompatible, with a thin external surface, a rounded and elongated shape (1) and a more flared mouth (2).

As can be seen in the drawings of the prototype, its external and visible part is plastic, wider at the lower end, or mouth (2).

The upper part is fitted with a handle (A) at the upper end. In the upper part of the handle are the various switches (3) for the mechanism that activates and deactivates the internal lead (4), the light (L) for night-time collection, and the on/off switch (3).

The lead mechanism is made up of two sections; an interior section (4) with a circular thread housed in the interior of the upper body of the collector which can be extended for several metres and goes out to the exterior through a hole (O) located in the middle of the side opposite the grip handle. Through the hole the internal lead (4) is connected to a section of the external lead (4') which hangs from the device and is fitted with a grip snap to attach to the dog collar, fitted to the opposite end.

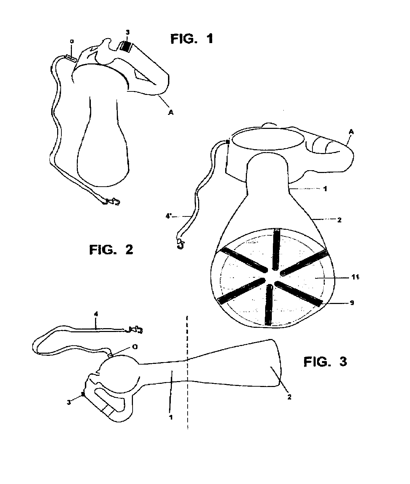

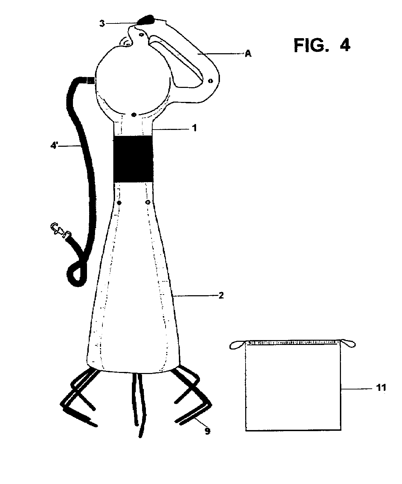

The elongated body of the collector contains the various components which activate the operation of the device; in other words: the rechargeable battery (5), the electric motor (6) and the body that activates the operation of the metal rods or claws (9) which carry out the collection of the excrement and consist of several L-shaped flexible metal rods, bent in their lower half into a "claw" shape, which are bent around the end of the body, covering the circle formed by the external mouth of the collector when it is not in operation (9 in figure 2), extending towards the exterior enabling the excrement to be collected when the device is in operation (9 in figures 2 and 4). In the section opposite the collection area, the claws are straight and are grouped together into a claw holder (10). This is in turn joined to a shaft or worm gear (7) which determines the extension or bending movement of the claws through its activation by means of the electric motor (6). The activation and order of extension/bending of the claws is transmitted from the upper on/off switch (3) fitted on the handle to the end of travel or claw holder by means of an internal wiring system (8) which runs along the internal part of the body of the collector.

The collector device includes a lighting component (L) the operation of which is activated in the upper section and consists of a power LED (not shown in the designs) which has a dual function, improving visibility for users' night-time walks and providing light in the place where the pet has deposited the excrement in order for it to be removed accordingly.

The device may be offered in various versions, adding or removing accessories without losing any of its main functions. The simplest version, short and small in size, would not include the lead or the torch. It would be a smaller and lighter collector; extremely practical and efficient. A second option could have either just the lead or just the torch. A further option could incorporate a useful and practical tool consisting of a small compartment for storing several bags.

This collector will usually also consist of two differentiated units divided by an imaginary line as shown in figure 3:
Reference 1 would correspond to the ergonomic "body", which contains the motor, battery, mains adaptor, handle, switches, light and lead (figure 3).

The device is powered electrically by means of one or several rechargeable batteries installed in its interior, providing sufficient range to allow the user to lowers/opens the "claws" or metal rods when the device is activated. The properties of the metal rods, made of tempered steel, allow their lower end to bend and lean towards the centre of the "mouth" (9 in figure 2). When the "claws" are lowered, they open up at the same time and are visible outside the device (9 in figure 4); this is when they are placed above the excrement and the mechanism is again activated so that they close up, collect the waste and move back up to their position inside the collector. The excrement stays inside the bag, which will have been placed there previously, and the user will be able to carry on walking until a container in which to dispose of the excrement is found, as there is no danger of it falling out (figure 5).

It will not be necessary for the user to remove the bag and carry it in their hand, as it will be completely sealed inside the collector without the risk of it falling out until it is ejected into the appropriate container by activating the container again.

This straightforward action will allow the excrement to be collected, removing it from the public thoroughfare, and the user will be able to carry on walking, repeating this operation as many times as necessary thanks to the device's rechargeable battery. The process can also be undertaken at night or in dark places with the addition of the light.

This device can be manufactured in different formats, in one or more parts; either dividing it into two halves vertically in order to place the whole mechanism inside and close it by placing the two sides back together; or dividing it into two halves horizontally, separating the two units, with the device in this case being activated when the two halves are joined together and come into contact, enabling the collection mechanism to start up.

Both parts and units ("body" and "mouth") fit together perfectly, as can be seen in the drawings of the prototype, forming a homogenous and compact walk their dog and at the same time collect the animal's excrement as many times as it feels the need (figure 5).

It can be recharged by placing the device on a base connected to the mains, or directly by connecting one end of a charger to the mains and the other end to the device by means of a cable and a jack.

The handle and the on/off switches, the light and the lead are situated on the visible upper end (figure 5).

The user can pick up the device with the handle and will be able to activate it with their hand whenever they wish. They can put their pet on the lead and walk it until the animal stops to do its business. They will then place the collector over the excrement and press the ON switch to turn on the motor, which will in turn activate the collection mechanism, causing the claws or metal rods to come out of the lower end, with the bag, and open up to collect and remove the excrement (figure 4).

### Reference 2 would correspond to the "mouth" (figure 3),

As can be seen in the drawing (figure 2), on the lower end of its tapered shape there is a wide, flared "mouth", inside which there are "claws" with which the dog excrement is collected from the ground.

A bag (11) with elastic or string at the open end is placed around these "claws" before use, into which the excrement will be deposited after it has been collected. The bag will be sealed with the elastic after its use and can then be disposed of in a bin (figure 4).

The interior of the upper section of unit 2 contains the collection mechanism, basically a shaft or worm gear which rotates, lowering the metal rods to their limit or end of run; it is connected to the motor and raises/lowers and unit internally and externally, which can be easily disassembled for cleaning or repair if necessary by removing the mounting screws.

The bag is made of disposable material to be used and thrown away once used. The materials of the device are light and small in size, making them practical, clean, convenient and economical.

### METHOD OF USE OF THE COLLECTOR

The excrement collector will preferably consist of two parts which can be attached to each other, making the installation of the internal components and their subsequent maintenance easier. It may be made of either one or two parts. The external part will be constructed of light but strong plastic material, preferably biocompatible, with a thin external surface, a rounded and elongated shape and a more flared mouth (1 and 2 in figure 3).

The embodiment described below and shown by the drawings would correspond to the most complete version, including the lead and the light in the collector. We have chosen to describe this embodiment and have attached these drawings to show the possible location of the main components of the operating and collection mechanism and at the same time show that other accessories can optionally be included in order to make it even more practical and useful for the user.

As we have explained in the previous section and can be seen in the prototype drawings, its external and visible part is plastic, wider at the lower end (figures 1, 2, 3, 4 and 5). It is picked up by a handle on the upper end, next to which are situated the lead, light and on/off switches. The lead, power connector, dimmer, electric motor, switch, relays, end of travel, power LED, resistor, rechargeable battery and all the wiring will be placed in the interior (figure 3: unit 1 or "body"), (figure 5: top half).

The device can have an extendable and retractable lead incorporated for walking the dog (4.4' in figure 5). After the animal has finished doing its business, the user will approach the excrement, place the lower edge of the device over it and move the switch into the ON position until the excrement has all been collected. It will then be deposited in the bag to be subsequently disposed of in the bin (figure 4).

It will be possible to use one finger on the handle to move the switch from the OFF position to the ON position in order to activate the motor which will operate the collection device, causing the worm gear connected to the motor to rotate around the cylinder and lower the "claws" down to their limit or end of travel, opening them up as if they were a "hand" with the bag already placed inside. The switch will then be pressed again so that the "claws" move back up, with the bag containing the excrement being sealed and retained inside (figure 5).

The collector may be used again during the walk, first placing another bag in the device if necessary. The user will also have the option of using the torch on night-time walks, both to see where they are going and to provide light in the place where their pet has deposited the excrement and remove it accordingly.

The object of this invention is intended to be a useful device for collecting animal excrement in view of the great demand and need of millions of people all over the world who have pets and regularly walk them along public thoroughfares so that the animals can do their business. This device will mean that those people will no longer suffer this genuine and major problem and will not create it for others. The collector offers an effective solution for pet owners, everyone else who walks along pavements, parks and gardens, and for the authorities, who will not have to resort to penalties or spend millions of Euros on this problem.

The materials used in the manufacture of the components of the collector, their shape and size, and all the accessory details which may be offered, as well as their placement, will be independent of the object of this invention, provided that they do not affect its essential functions. The drawing shown and the method of operation relate to the prototype, which may be modified during the manufacturing process, including any variations in materials, shape or placement or any changes in the components and accessories which do not affect the invention activity or giving up its function.

## Claims

1. Animal excrement collector consisting in two units (1 and 2); the first unit lodging the handle (A), the swtichers (3), the coiled internal lead (4) and the external lead (4'), the led light (L), the battery (5), motor (6) which rotates a shaft or worm gear (7), the internal wiring (8). The second unit comprises the claws (9) acting as a mechanism for holding the bag (11). The whole essemble can be provided with a led light, lead and a bag storage compartment.
